# EUROPEAN PATENT APPLICATION

(11) **EP 4 318 416 A1**
(43) Date of publication of application: **07.02.2024**
(21) Application number: 23763680.8
(22) Date of filing: 28.02.2023
(51) Int. Cl.: G07C 9/25, G07C 9/27, G07C 9/00, G06V 40/16

(54) **AUTHENTICATION METHOD AND SYSTEM**

(30) Priority: 04.03.2022 KR 20220027829
(71) Applicant: Cubox Co., Ltd., Seoul, 06236 (KR)
(72) Inventor: NAM, Un Sung, Seoul 04311 (KR); NAM, Yong Han, Seoul 06204 (KR); CHUN, Ki Cheol, Seoul 05118 (KR)
(74) Representative: Ostertag & Partner Patentanwälte mbB
(86) International application number: PCT/KR2023/002761
(87) International publication number: WO 2023/167481

(57) **Abstract**

Disclosed are an authentication method and system comprising steps in which: a gate terminal obtains identification information about a user terminal; the gate terminal transmits the identification information about the user terminal and unique information about the gate terminal to a local face recognition server; the local face recognition server requests user authentication data from a main face recognition server; the main face recognition server extracts user face image data, matched with the identification information about the user terminal, from an entire database in response to the request of the local face recognition server, and transmits same to the local face recognition server; the local face recognition server generates a real-time database for a specific region by using the user face image data; and the gate terminal obtains real-time user face image data, and controls user access on the basis of an authentication result obtained by comparing the real-time user face image data to data included in the real-time database of the local face recognition server.

## Description

### [Technical Field]

The present disclosure relates to an authentication method and system using a beacon signal and face recognition technology.

### [Background Art]

The human body includes various biometric information such as fingerprint, voice, face, iris and vein. Since such biometric information is unique information, authentication technologies using this information are widely used. In particular, in the case of an airport, a government office, an office, etc. where access should be strictly restricted for safety management, many access authentication technologies using biometric information such as fingerprint are already being used.

Authentication technology using such biometric information initially used information obtained by contacting a part of the body, such as fingerprint or iris, with a sensing device. However, since inaccuracy of obtained biometric information is high and the sensing device is used by many users, there is a problem that an unsanitary condition is likely to be caused. Accordingly, in recent years, authentication technologies using biometric information obtained in a non-contact manner, such as face images, are increasing.

In the conventional art, there is a method of exclusively using a wireless signal such as BLE, WiFi and UWB, but this method is difficult to implement an antenna radiation pattern of an RF signal in a directional manner, and reception sensitivity is affected depending on the characteristics of a receiver. Therefore, it is difficult to distinguish between getting on and getting off, and limitations exist in processing a plurality of wireless signals. Consequently, real-time user processing is difficult.

### [DISCLOSURE]

### [Technical Problem]

The present disclosure is to provide a non-contact authentication method and system to which unique identification information of a user terminal and a face authentication method are applied.

The present disclosure is to provide a real-time access authentication method and system which generates a real-time database in a local face recognition server using unique identification information of a user terminal and unique information of a gate terminal and uses the generated real-time database.

### [Technical Solution]

In an embodiment, an authentication method may include: a step in which a gate terminal obtains identification information of a user terminal; a step in which the gate terminal transmits the identification information of the user terminal and unique information of the gate terminal to a local face recognition server; a step in which the local face recognition server requests user authentication data to a main face recognition server; a step in which the main face recognition server extracts user face image data matching the identification information of the user terminal from an entire database in response to the request of the local face recognition server and transmits the user face image data to the local face recognition server; a step in which the local face recognition server generates a real-time database of a specific area using the user face image data; and a step in which the gate terminal obtains real-time user face image data and controls user access on the basis of an authentication result obtained by comparing the real-time user face image data and the data included in the real-time database of the local face recognition server.

The step in which a gate terminal obtains identification information of a user terminal may include a step in which, when the user terminal and the gate terminal are within a predetermined distance, the user terminal transmits a BLE signal and transmits the identification information of the user terminal to the gate terminal.

The step in which a gate terminal obtains identification information of a user terminal may include a step in which, when the user terminal and the gate terminal are within a predetermined distance, the gate terminal transmits a BLE signal and obtains the identification information of the user terminal.

The identification information of the user terminal may include universally unique identifier (UUID) information capable of specifying the user.

The unique information of the gate terminal may include location information and getting-on/getting-off information of the gate terminal.

The authentication method may further include a step in which a user corresponding to the user terminal is registered, before the step in which a gate terminal obtains identification information of a user terminal, wherein the step in which a user corresponding to the user terminal is registered may include: a step in which the user terminal requests user registration to the main face recognition server; a step in which the main face recognition server requests user information input by inquiring whether the user is registered; a step in which, when user information is inputted to the user terminal, a UUID corresponding to the user information is generated in the main face recognition server; and a step in which the generated UUID is transmitted to the user terminal.

The step in which the local face recognition server requests user authentication data to a main face recognition server may include: a step in which the local face recognition server transmits the unique information of the gate terminal and the identification information of the user terminal to the main face recognition server; and a step in which the main face recognition server inquires user information corresponding to the identification information of the user terminal.

The step in which the local face recognition server generates a real-time database of a specific area using the user face image data may include: a step in which, each time the local face recognition server receives the user face image data matching the identification information of the user terminal extracted from the main face recognition server, the local face recognition server updates the real-time database of the specific area.

The step in which the local face recognition server generates a real-time database of a specific area using the user face image data may include: a step in which, when a preset time elapses after the local face recognition server receives the user face image data matching the identification information of the user terminal extracted from the main face recognition server, the local face recognition server deletes the received user face image data from the real-time database of the specific area.

The step in which the gate terminal controls user access on the basis of an authentication result obtained by comparing the real-time user face image data and the data included in the real-time database of the local face recognition server may include a step in which respective templates are generated using the user face image data stored in the real-time database of the local face recognition server and real-time user face image data obtained through a camera of the gate terminal and similarity of both the templates is calculated by comparing the two templates.

The authentication method may further include a step in which, as a result of comparing the real-time user face image data with the real-time database generated by the local face recognition server, when similarity of both data is equal to or greater than a preset value, it is determined that 'access is permitted'.

The authentication method may further include: a step in which, as a result of comparing the real-time user face image data with the real-time database generated by the local face recognition server, when similarity of both data is less than a preset value, it is determined that 'access is not permitted'.

The step in which the gate terminal obtains real-time user face image data may include a step in which, by driving a camera of a gate terminal most adjacent to the user terminal among gate terminals provided in a gate system, the user's face image is photographed.

The step in which the gate terminal is controlled on the basis of an authentication result may include a step in which, when an authentication result is an authentication success, use history data including at least one of the identification information of the user terminal, the unique information of the gate terminal, an authentication result, time information and getting on and off information is generated, and is transmitted to the main face recognition server.

The authentication method may further include: a step in which, when an authentication result is an authentication success, a payment system generates payment data on the basis of the identification information of the user terminal and the unique information of the gate terminal; and a step in which payment is performed through payment means registered by the user.

### [Advantageous Effects]

According to the embodiments of the present disclosure, by providing a non-contact authentication method and system to which authentication technology combining identification information of a user terminal and a face recognition method is applied, it is possible to improve authentication accuracy and user convenience.

In addition, since a real-time database for each specific area is configured using a local face recognition system disposed in a specific area, authentication speed and authentication accuracy may be improved during 1:N authentication.

Furthermore, by disposing a non-contact authentication method and system to which authentication technology combining identification information of a user terminal and a face recognition method is applied, in various places where user authentication is required, such as an airport and a public transportation, it is possible to provide convenient authentication.

### [Brief Description of Drawings]

FIG. 1 is a diagram showing an authentication system in accordance with an embodiment of the present disclosure.
FIG. 2 is a diagram showing a gate terminal in accordance with an embodiment of the present disclosure.
FIG. 3 is a diagram showing a face recognition system in accordance with an embodiment of the present disclosure.
FIG. 4 is a flowchart showing an authentication method in accordance with an embodiment of the present disclosure.
FIG. 5 is a diagram showing the authentication method in accordance with the embodiment of the present disclosure.

### [Mode for Disclosure]

The accompanying drawings are only for easy understanding of embodiments disclosed in the present specification, and the technical spirit disclosed in the present specification is not limited by the accompanying drawings. It should be understood that all changes, equivalents and substitutes are included in the spirit and technical scope of the present disclosure.

Terms including ordinal numbers, such as first, second, etc., may be used to describe various components, but the components are not limited by the terms. Each of the terms is only used for the purpose of distinguishing one component from another component.

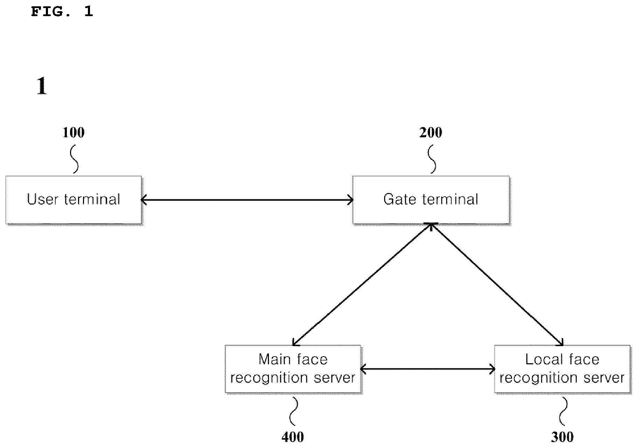

FIG. 1 is a diagram showing an authentication system 1 in accordance with an embodiment of the present disclosure.

Referring to FIG. 1, the authentication system 1 may include a user terminal 100, a gate terminal 200, a main face recognition server 300 and a local face recognition server 400.

A device, a server and a system which configure the authentication system 1 may communicate with each other through a network. Specifically, the user terminal 100 corresponds to a terminal which is possessed by a user who wants to pass through the access gate of the gate terminal 200, and may be implemented by a movable device such as a portable phone, a smartphone, a notebook, a personal digital assistant (PDA), a portable multimedia player (PMP), a tablet PC and a wearable device.

The user terminal 100 may transmit and receive data to and from other devices or external devices such as the gate terminal 200 and the servers 300 and 400 by using wireless communication technology.

The user terminal 100 may transmit the user's unique information to the gate terminal 200 at regular intervals using Bluetooth". The user's unique information may mean the identification information of the user terminal 100. The user's unique information may include a beacon signal, that is, a BLE (Bluetooth Low Energy) signal based on a low-power near field communication technology. The gate terminal 200 may control an access gate using obtained signal information.

In the embodiment, it has been described that the user terminal 100 transmits the user's unique information to the gate terminal 200. However, depending on an implementation method, it is also possible that the gate terminal 200 transmits, to the user terminal 100, a signal which requests the user's unique information and the user terminal 100 transmits the requested user's unique information to the gate terminal 200.

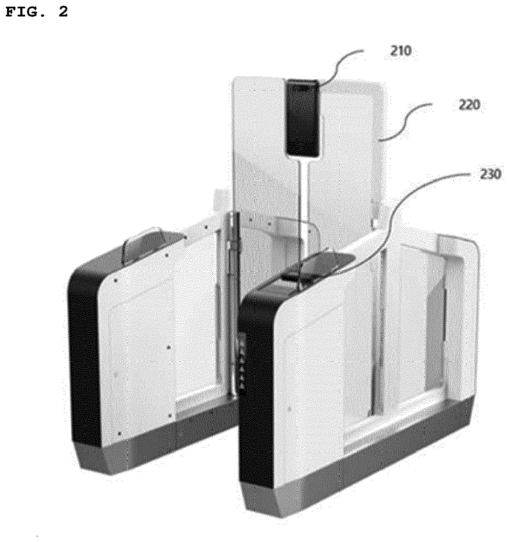

A detailed configuration of the gate terminal 200 will be described below with reference to FIG. 2.

FIG. 2 is a diagram showing the gate terminal 200 in accordance with an embodiment of the present disclosure.

First, the gate terminal 200 may be installed at a place where a user is expected to pass, such as a gate, an access door, a public transportation access or an access of a specific building, and the shape of the gate terminal 200 is not limited to FIG. 2. That is to say, it is sufficient that the gate terminal 200 is understood as a terminal which a user should pass through to reach a specific location, and a separate structure which restricts a user's access is not essential. For example, the gate terminal 200 may mean a subway gate, a door for getting on a bus or a taxi, an access to a store or a specific building, etc. Hereinafter, among various types of gate terminals, the gate terminal 200 shown in FIG. 2 will be described as an example.

Referring to FIG. 2, the gate terminal 200 which controls gate access may include a communication unit 250 (not shown) which communicates with the user terminal 100 and the servers 300 and 400, a camera 210 for obtaining user face image data, a gate unit 220, a display unit 230, and a control unit 240 (not shown) for controlling the gate terminal 200.

The gate terminal 200 may be a gate control device provided in a gate system which requires access authentication, and in the case of the gate terminal 200 which is separately provided with the gate unit 220 for gate passage, the gate terminal 200 may be installed to control a plurality of gates. As described above, the shape of the gate terminal 200 is not limited to FIG. 2.

User authentication may be performed in the gate terminal 200, and as the occasion demands, the user terminal 100 or the servers 300 and 400 may also serve as an authentication device.

The camera 210 of the gate terminal 200 corresponds to an input unit for inputting an image signal. The camera 210 may be configured by at least one camera. For example, when the user approaches within a predetermined distance of the gate terminal 200 to pass through the gate unit 220, the control unit 240 may control the camera 210 to obtain the face image data of the user. The face image data obtained through the camera 210 may be stored in a memory (not shown).

The communication unit 250 of the gate terminal 200 may transmit and receive data to and from external devices such as the face recognition servers 300 and 400 and the user terminal 100. The communication unit 250 may include a communication module which uses a wireless signal such as Bluetooth, WiFi and UWB. For example, among communication modules, a Bluetooth module may receive user identification information or a beacon signal transmitted from the user terminal 100 at regular intervals. In addition to receiving the user identification information received from the user terminal 100, it is also possible that, when the user terminal 100 approaches within an identifiable distance, the gate terminal 200 transmits, to the user terminal 100, a signal which requests the user identification information.

After obtaining the user identification information from the user terminal 100, the communication module may also transmit the user identification information to another device at regular intervals.

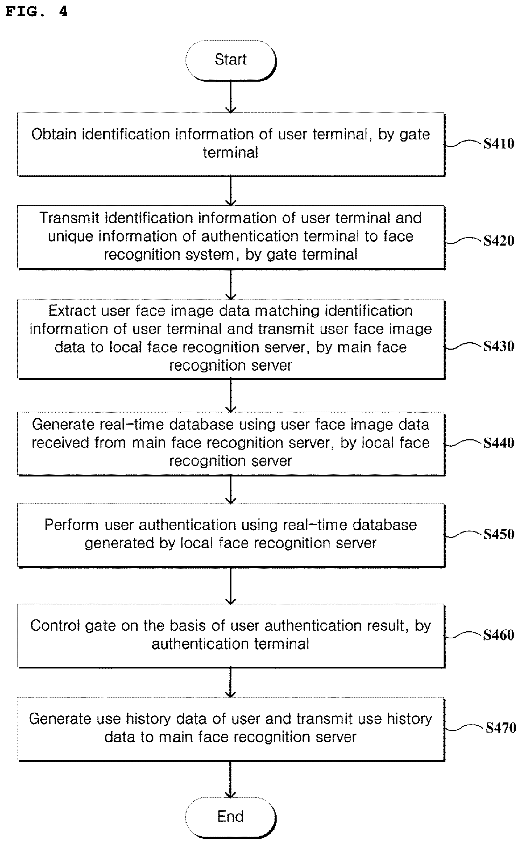

When the user identification information is received from the user terminal 100, the control unit 240 of the gate terminal 200 may perform user authentication on the basis of the received data, and may control the gate unit 220 according to a response or a control command based on a result value. A detailed authentication method will be described below with reference to FIG. 4.

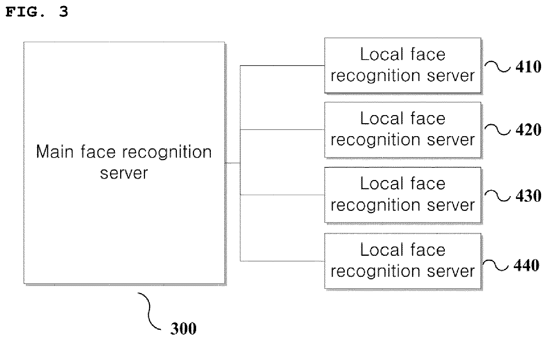

FIG. 3 is a diagram showing the configuration of a face recognition system in accordance with an embodiment of the present disclosure. The face recognition system in accordance with the embodiment of the present disclosure may be configured by the main face recognition server 300 and a plurality of local face recognition servers 410, 420, 430 and 440.

The main face recognition server 300 and the local face recognition server 400 in accordance with the embodiment of the present disclosure may correspond to an authentication server which is provided with a database for user authentication, and may be collectively referred to as a face recognition system.

The main face recognition server 300 may integratedly manage data allocated to the plurality of local face recognition servers 400, and may communicate with each of the local face recognition servers 410, 420, 430 and 440 which are installed in specific areas.

For example, when the gate terminal 200 transmits the user identification information for the recognized user terminal 100 and the unique information of the gate terminal 200 to the face recognition system, the face recognition system may generate a database corresponding to the user on the basis of the received information. The gate terminal 200 may obtain a user authentication result using the database generated by the face recognition system, and may control the gate unit 220 of the gate terminal 200. User authentication may be performed in various devices such as the gate terminal 200, a server and the user terminal 100.

Specifically, the main face recognition server 300 corresponds to a server which integratedly manages the authentication system 1 in accordance with the embodiment of the present disclosure. The main face recognition server 300 may generate an integrated database including authentication data obtained from the user terminal 100, the gate terminal 200 and the one or more local face recognition servers 410, 420, 430 and 440. The main face recognition server 300 may be connected to the one or more local face recognition servers 410, 420, 430 and 440 through wired and wireless communication technologies.

When receiving, from the gate terminal 200, data related with user authentication, the main face recognition server 300 may transmit data corresponding to a corresponding user to a local face recognition server. Alternatively, when receiving, from the gate terminal 200, data related with user authentication, a local face recognition server may request data corresponding to a corresponding user to the main face recognition server 300. The main face recognition server 300 may transmit the requested data to the local face recognition server.

The local face recognition server 400 in accordance with the embodiment of the present disclosure as a server which is located in a specific area may be a local server for performing real-time authentication in an area server. For example, when there is an access authentication gate in each station, such as a subway station, the local face recognition server 400 may separately exist within a range that may cover each subway station.

In other words, a first local face recognition server 410 may exist in a first subway station, a second local face recognition server 420 may exist in a second subway station, and a third local face recognition server 420 and a fourth local face recognition server 440 may exist in third and fourth subway stations, respectively.

Hereunder, for the sake of convenience in explanation, a case where the user passes through a gate in a specific area among a plurality of local face recognition servers will be described.

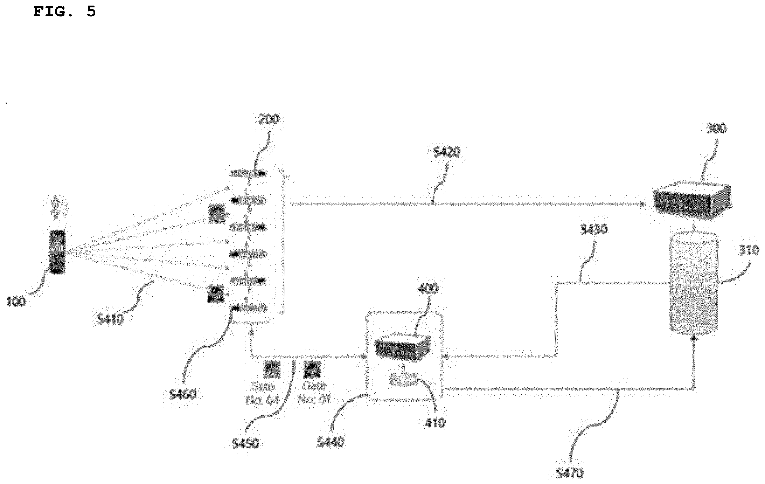

According to the embodiment of the present disclosure, the local face recognition server 400 may be connected to at least one gate terminal 200 which exists at a specific location, and may generate a real-time database for supporting user authentication of the at least one gate terminal 200 which exists at the corresponding location. A specific user authentication method will be explained below with reference to FIGS. 4 and 5.

FIG. 4 is an operation flowchart showing an authentication method in accordance with an embodiment of the present disclosure.

Referring to FIG. 4, a user should pass through a gate terminal to pass through an access gate. The user has the user terminal 100, and the user terminal 100 may include a portable electronic device such as a portable phone, a smartphone and a tablet PC. Hereinafter, description will be made assuming that the user terminal 100 has approached within a predetermined distance capable of near field communication with the gate terminal 200.

According to the embodiment of the present disclosure, the authentication method may include a step S410 in which the gate terminal 200 obtains the identification information of the user terminal 100. Specifically, the step in which the gate terminal 200 obtains the identification information of the user terminal 100 may include a step in which, when the user terminal 100 and the gate terminal 200 are within the predetermined distance, the user terminal 100 transmits a BLE signal and transmits the identification information of the user terminal 100 to the gate terminal 200. Alternatively, a step in which, when the user terminal 100 and the gate terminal 200 are within the predetermined distance, the gate terminal 200 transmits a BLE signal and obtains the identification information of the user terminal 100 may be included. Namely, according to the embodiment of the present disclosure, it is also possible that the gate terminal 200 transmits a BLE beacon signal and, when the user terminal 100 approaches within a predetermined range of the gate terminal 200, the user terminal 100 is connected to the gate terminal 200 and the gate terminal 200 obtains the identification information of the user terminal 100.

Data transmitted by the user terminal 100, as user identification information, may include unique information capable of specifying the user. For example, the identification information of the user terminal 100 may include a beacon signal, that is, a universally unique identifier (UUID) corresponding to an identification ID capable of specifying the user, and may be generated in advance from the face recognition system or the like when the user terminal 100 is registered. The user terminal 100 may periodically transmit the identification information of the user terminal 100, and when the user approaches the gate terminal 200 provided in the gate system within the predetermined distance, the gate terminal 200 installed in the gate system may recognize the identification information of the user terminal 100 transmitted from the user terminal 100.

Meanwhile, according to a usage scenario of the present disclosure, when a plurality of users pass through any one of a plurality of gates, such as a gate disposed in a subway station and an airport access gate, authentication for gate access is performed through gate terminals provided in a gate system. Therefore, it is sufficient that, according to the corresponding scenario, the identification information or beacon signal of a user terminal is received by at least one of the gate terminals provided in the gate system.

According to the embodiment of the present disclosure, the authentication method may include a step S420 in which the gate terminal 200 transmits the identification information of the user terminal 100 and the unique information of the gate terminal 200 to the face recognition system.

Specifically, the unique information of the gate terminal 200, as an identification ID assigned on the basis of a specific area where a gate is disposed, may include the location information and getting-on/getting-off information of the corresponding gate terminal 200. The getting-on/getting-off information may be information for determining whether the user passing through the gate terminal 200 is getting on or getting off. For example, when the user enters or exits a public transportation or a store, a gate terminal 200 which is installed in a direction for entering a corresponding place may determine as 'getting on' or 'entry', and a gate terminal 200 which is installed in a direction for leaving the corresponding place may be determined as 'getting off' or 'exit'.

The gate terminal 200, which has received the identification information of the user terminal 100 including the UUID capable of specifying the user, may transmit the received identification information of the user terminal 100 and the unique information of the gate terminal 200 to the local face recognition server 400 of the face recognition system.

The local face recognition server 400 corresponds to a local face recognition server which exists in a specific area where the gate terminal 200 is disposed.

Meanwhile, according to another embodiment of the present disclosure, it is also possible that the gate terminal 200 transmits the identification information of the user terminal 100 and the unique information of the gate terminal 200 directly to the main face recognition server 300.

According to the embodiment of the present disclosure, the authentication method may include a step in which the local face recognition server 400 requests user authentication data to the main face recognition server 300. As the local face recognition server 400 requests user authentication data to the main face recognition server 300, the local face recognition server 400 may generate a real-time database corresponding to any one of the user's unique information, beacon information and UUID information included in the identification information of the user terminal 100.

Specifically, the step in which the local face recognition server 400 requests user authentication data to the main face recognition server 300 may include a step in which the local face recognition server 400 transmits the unique information of the gate terminal 200 and the identification information of the user terminal 100 to the main face recognition server 300 and a step in which the main face recognition server 300 inquires user information corresponding to the identification information of the user terminal 100.

According to the embodiment of the present disclosure, the authentication method may include a step S430 in which the main face recognition server 300 extracts user face image data matching the identification information of the user terminal 100 from an entire database in response to the request of the local face recognition server 400 and transmits the user face image data to the local face recognition server 400.

The main face recognition server 300 holds in advance the user face image data registered by being received from the user terminal 100, the gate terminal 200 and the local face recognition server 400. The user face image data may be registered directly through the user or may be registered when an authentication event for the user to pass through a gate occurs.

Specifically, the authentication method in accordance with the embodiment of the present disclosure may further include a step in which the user corresponding to the user terminal 100 is registered, before the step S410 in which the gate terminal 200 obtains the identification information of the user terminal 100.

The step in which the user corresponding to the user terminal 100 is registered may include a step in which the user terminal 100 requests user registration to the main face recognition server 300, a step in which the main face recognition server 300 requests user information input by inquiring whether the user is registered, a step in which, when user information is inputted to the user terminal 100, the UUID corresponding to the user information is generated in the main face recognition server 300, and a step in which the generated UUID is transmitted to the user terminal 100.

In the user information, biometric information such as user face image data, fingerprint and iris recognition data capable of identifying the user and various personal information such as name and gender may be included. The main face recognition server 300 may generate a database corresponding to the specific user by collecting the user face image data, and the database corresponding to the specific user may be stored by matching user UUID information and the user face image data.

The data may be updated at regular intervals. Thereafter, when approaching the gate terminal 200 within the predetermined distance, the user terminal 100 may transmit the identification information of the user terminal 100 including the UUID information to the gate terminal 200. In the above embodiment, a case where user authentication is performed using the user face image data has been described. However, the user face image data means one of biometric information held by the user, and a case where user authentication is performed using various biometric information such as fingerprint and iris recognition data may also be included.

FIG. 4 will be described again.

When the identification information of the user terminal 100 and the unique information of the gate terminal 200 are received from the gate terminal 200, the main face recognition server 300 inquires the UUID included in the identification information of the user terminal 100 in a face image database of the main face recognition server 300. The main face recognition server 300 may obtain face image data matching the UUID information, and may transmit the face image data matching the UUID information to the local face recognition server 400 on the basis of location information included in the unique information of the gate terminal 200.

According to the embodiment of the present disclosure, the authentication method may include a step S440 in which the local face recognition server 400 generates a real-time database using the user face image data received from the main face recognition server 300.

Specifically, the real-time database may correspond to a set of some data in the entire database of the main face recognition server 300, and may be a database generated as the face image data corresponding to the user UUID is transmitted to the local face recognition server 400 corresponding to the location information included in the unique information of the gate terminal 200.

As described above, the local face recognition server 400 as a server which covers a specific area may correspond to a local server for performing real-time authentication in an area server. Since the local face recognition server 400 generates the real-time database using the face image data sourced and provided from the main face recognition server 300, it is possible to perform user authentication with a small amount of data.

According to the embodiment of the present disclosure, the authentication method may include a step S450 in which, after the local face recognition server 400 generates the real-time database, user authentication is performed using the real-time database generated by the local face recognition server 400.

The user authentication may be performed by the gate terminal 200, or may be performed in the local face recognition server 400. The gate terminal 200 may control the gate unit 220 on the basis of a result of the user authentication.

Specifically, the authentication method may include a step in which, when the user enters the face recognition range of the gate terminal 200, the gate terminal 200 obtains real-time user face image data and controls user access on the basis of an authentication result obtained by comparing the real-time user face image data and data included in the real-time database of the local face recognition server 400.

In order to obtain the real-time user face image data, the gate terminal 200 may photograph the user's face using the camera 210 to obtain the real-time user face image data.

The gate terminal 200 provided in the gate system may photograph the user's face image by driving the camera 210 of the gate terminal 200 most adjacent to the user terminal 100. The real-time user face image data may be stored in the memory of the gate terminal 200, and the gate terminal 200 may perform user authentication by comparing the real-time user face image data with the real-time database generated by the local face recognition server 400. Alternatively, the local face recognition server 400 may receive the real-time user face image data obtained by the camera 210 of the gate terminal 200, and may perform user authentication by comparing the real-time user face image data with the real-time database.

According to the embodiment of the present disclosure, the step in which the local face recognition server 400 generates the real-time database of a specific area using the user face image data may include a step in which the local face recognition server 400 updates the real-time database.

Specifically, each time the local face recognition server 400 receives the user face image data matching the identification information of the user terminal 100 extracted from the main face recognition server 300, the local face recognition server 400 may update the real-time database of the specific area.

Alternatively, when a preset time elapses after the local face recognition server 400 receives the user face image data matching the identification information of the user terminal 100 extracted from the main face recognition server 300, the local face recognition server 400 may update the real-time database by deleting the received user face image data from the real-time database of the specific area.

For example, the user authentication method may be an embodiment as described below.

User authentication may be performed by generating respective templates using the user face image data stored in the real-time database of the local face recognition server 400 and the real-time user face image data obtained through the camera 210 of the gate terminal 200 and by calculating the similarity of both the templates by comparing the two templates. Each template may mean a type of data which is stored by extracting and analyzing the characteristics of biometric information.

According to the embodiment of the present disclosure, the authentication method may include a step S460 in which the gate terminal 200 controls user access on the basis of an authentication result. That is to say, the gate terminal 200 may control the gate unit 220 on the basis of a user authentication result.

For example, as a result of comparing the real-time user face image data with the real-time database generated by the local face recognition server 400, when the similarity of both the data is equal to or greater than a preset value, it is determined that 'access is permitted' and the gate unit 220 of the gate terminal 200 may be opened. As a result of comparing the real-time user face image data with the real-time database generated by the local face recognition server 400, when the similarity of both the data is less than the preset value, it is determined that 'access is not permitted'.

Hereinafter, a specific scenario will be described with reference to FIG. 5.

FIG. 5 is a diagram showing an authentication scenario in accordance with an embodiment of the present disclosure.

Referring to FIG. 5, the user possesses the user terminal 100, and the user terminal 100 and the gate terminal 200 may exist at a distance capable of near field communication with each other.

The user terminal 100 may transmit the identification information of the user terminal 100 to the gate terminal 200 by transmitting a BLE signal, or the gate terminal 200 may request and obtain the identification information of the user terminal 100 by transmitting a BLE signal (S410). The gate terminal 200 obtains the user UUID by obtaining the identification information of the user terminal 100.

Alternatively, when the user terminal 100 is recognized within a predetermined distance, the gate terminal 200 may obtain the identification information of the user terminal 100 by transmitting a BLE signal, and the gate terminal 200 obtains the user UUID through the identification information of the user terminal 100.

The gate terminal 200 may transmit its own unique information and the user UUID information to the face recognition system 300 and 400 (S420), and the main face recognition server 300 of the face recognition system may extract user face image data corresponding to the user UUID in an entire database 310. The main face recognition server 300 may transmit the extracted user face image data to the local face recognition server 400 (S430), and the local face recognition server 400 may generate a real-time database 410 (S440) . The gate terminal 200 may obtain real-time user face image data using the camera 210 of the gate terminal 200 which is adjacent to the user, and by performing user authentication using the real-time database generated by the local face recognition server 400 (S450), the gate terminal 200 may control a gate (S460) . The gate to be controlled may be a gate which has obtained the user face image data. Alternatively, the gate terminal 200 may control a gate by receiving a result of the user authentication performed by the local face recognition server 400.

According to the embodiment of the present disclosure, the authentication method may include a step S470 in which the gate terminal 200 may generate use history data of the user, and may transmit the use history data of the user to the main face recognition server 300.

Specifically, when an authentication result is an authentication success, the gate terminal 200 may generate use history data including at least one of the identification information of the user terminal 100, the unique information of the gate terminal 200, a authentication result and time information, and may transmit the use history data to the main face recognition server 300.

In addition, it is also possible that, when an authentication result is an authentication success, the local face recognition server 400 generates use history data including at least one of the identification information of the user terminal 100, the unique information of the gate terminal 200, an authentication result, time information and getting on and off information, and transmits the use history data to the main face recognition server 300.

In other words, an entity which performs authentication is the gate terminal 200 or the local face recognition server 400, and the main face recognition server 300 receives a result processed in the user terminal 100. The main face recognition server 300 may receive not only an authentication result from the user terminal 100, but also all of the identification information of the user terminal 100, the unique information of the gate terminal 200, an authentication result and time information.

For example, when a public transportation such as a subway station is used, the use history data may include 'UUID: Hong Gil-Soon' as a beacon signal, 'Seoul Station Line 1 Zone 3 Getting-on Terminal 1' as the unique information of the gate terminal 200, 'Authentication Success' as the authentication result, 'October 30, 2021, 12:00' as time information, and Passing through Getting-on Gate' as getting on and off information.

For another example, in an example which has an access door such as in a store, a convenience store, a stationery store, etc., the use history data may include 'UUID: Hong Gil-Soon' as a beacon signal, store name information as the unique information of the gate terminal 200, and 'Authentication Success' as the authentication result, 'October 30, 2021 12:00' as time information, and 'Entry to Store' as access information.

According to the embodiment of the present disclosure, corresponding data is called use history data, and may be provided to a payment system when an event occurs in which the user passes through an exit gate or an exit door in the future.

In addition, according to the embodiment of the present disclosure, the authentication method may further include a step in which, when an authentication result is an authentication success, the payment system generates payment data on the basis of the identification information of the user terminal 100 and the unique information of the gate terminal 200, and a step in which payment is performed through payment means registered by the user. The payment system may be provided in the main face recognition server 300, and it is also possible that a separate server which communicates with the main face recognition server 300 exists.

Specifically, the payment system may communicate with the face recognition system to obtain the identification information of the user terminal 100 and the unique information of the gate terminal 200. The payment system may specify the user's identity and location using the identification information of the user terminal 100 and the unique information of the gate terminal 200, and may inquire whether payment means registered by the user exists, on the basis of the identification information of the user terminal 100. When payment means registered by the user exists, the payment system may deduct a payment amount through the corresponding payment means. The payment system may transmit a payment result to the main face recognition server 300.

In addition, depending on the type of the payment system, not only when a fixed fee is paid as a one-time payment but also when there are separate getting-on and getting-off stops such as subway stations, the main face recognition server 300 may check the user's getting-on location information through the unique information of the gate terminal 200, and thereafter, when the user gets off, by checking the user's getting-off location information, it is also possible to calculate the fare based on the user's getting-on and getting-off stations and generate payment data.

In a case where there is an access door such as in a store or a stationery store, the main face recognition server 300 may check the user's location information through the unique information of the gate terminal 200, and it is also possible to calculate the fee on the basis of the user's entry and exit times and generate payment data. Alternatively, when the user purchases a specific item, it is also possible to receive price information for the purchased item, calculate the price and generate payment data.

Although the above-described present disclosure has been described with reference to the embodiments shown in the drawings to aid understanding of an authentication method and device for gate access according to embodiments of the disclosed technology, this is merely for illustrative purposes, and those skilled in the art will appreciate that various modifications and other equivalent embodiments are possible. Accordingly, the true technical scope of the disclosed technology should be determined by the appended claims.

## Claims

1. An authentication method comprising:
a step in which a gate terminal obtains identification information of a user terminal;
a step in which the gate terminal transmits the identification information of the user terminal and unique information of the gate terminal to a local face recognition server;
a step in which the local face recognition server requests user authentication data to a main face recognition server;
a step in which the main face recognition server extracts user face image data matching the identification information of the user terminal from an entire database in response to the request of the local face recognition server and transmits the user face image data to the local face recognition server;
a step in which the local face recognition server generates a real-time database of a specific area using the user face image data; and
a step in which the gate terminal obtains real-time user face image data and controls user access on the basis of an authentication result obtained by comparing the real-time user face image data and the data included in the real-time database of the local face recognition server.

2. The authentication method of claim 1, wherein the step in which a gate terminal obtains identification information of a user terminal comprises:
a step in which, when the user terminal and the gate terminal are within a predetermined distance, the user terminal transmits a BLE signal and transmits the identification information of the user terminal to the gate terminal.

3. The authentication method of claim 1, wherein the step in which a gate terminal obtains identification information of a user terminal comprises:
a step in which, when the user terminal and the gate terminal are within a predetermined distance, the gate terminal transmits a BLE signal and obtains the identification information of the user terminal.

4. The authentication method of claim 1, wherein the identification information of the user terminal includes universally unique identifier (UUID) information capable of specifying the user.

5. The authentication method of claim 1, wherein the unique information of the gate terminal includes location information and getting-on/getting-off information of the gate terminal.

6. The authentication method of claim 1, further comprising:
a step in which a user corresponding to the user terminal is registered, before the step in which a gate terminal obtains identification information of a user terminal,
wherein the step in which a user corresponding to the user terminal is registered comprises:
a step in which the user terminal requests user registration to the main face recognition server;
a step in which the main face recognition server requests user information input by inquiring whether the user is registered;
a step in which, when user information is inputted to the user terminal, a UUID corresponding to the user information is generated in the main face recognition server; and
a step in which the generated UUID is transmitted to the user terminal.

7. The authentication method of claim 1, wherein the step in which the local face recognition server requests user authentication data to a main face recognition server comprises:
a step in which the local face recognition server transmits the unique information of the gate terminal and the identification information of the user terminal to the main face recognition server; and
a step in which the main face recognition server inquires user information corresponding to the identification information of the user terminal.

8. The authentication method of claim 1, wherein the step in which the local face recognition server generates a real-time database of a specific area using the user face image data comprises:
a step in which, each time the local face recognition server receives the user face image data matching the identification information of the user terminal extracted from the main face recognition server, the local face recognition server updates the real-time database of the specific area.

9. The authentication method of claim 1, wherein the step in which the local face recognition server generates a real-time database of a specific area using the user face image data comprises:
a step in which, when a preset time elapses after the local face recognition server receives the user face image data matching the identification information of the user terminal extracted from the main face recognition server, the local face recognition server deletes the received user face image data from the real-time database of the specific area.

10. The authentication method of claim 1, wherein the step in which the gate terminal controls user access on the basis of an authentication result obtained by comparing the real-time user face image data and the data included in the real-time database of the local face recognition server comprises:
a step in which respective templates are generated using the user face image data stored in the real-time database of the local face recognition server and real-time user face image data obtained through a camera of the gate terminal and similarity of both the templates is calculated by comparing the two templates.

11. The authentication method of claim 10, further comprising:
a step in which, as a result of comparing the real-time user face image data with the real-time database generated by the local face recognition server, when similarity of both data is equal to or greater than a preset value, it is determined that 'access is permitted'.

12. The authentication method of claim 10, further comprising:
a step in which, as a result of comparing the real-time user face image data with the real-time database generated by the local face recognition server, when similarity of both data is less than a preset value, it is determined that 'access is not permitted'.

13. The authentication method of claim 1, wherein the step in which the gate terminal obtains real-time user face image data comprises:
a step in which, by driving a camera of a gate terminal most adjacent to the user terminal among gate terminals provided in a gate system, the user's face image is photographed.

14. The authentication method of claim 1, wherein the step in which the gate terminal is controlled on the basis of an authentication result comprises:
a step in which, when an authentication result is an authentication success, use history data including at least one of the identification information of the user terminal, the unique information of the gate terminal, an authentication result, time information and getting on and off information is generated, and is transmitted to the main face recognition server.
